# EUROPÄISCHE PATENTANMELDUNG

(11) **EP 2 523 331 A1**
(43) Veröffentlichungstag der Anmeldung: **14.11.2012**
(21) Anmeldenummer: 11165622.9
(22) Anmeldetag: 11.05.2011
(51) Int. Cl.: H02M 5/458, H02H 3/08, H02H 3/20

(54) **Frequenzumrichter mit Erdschlussschutz und Verfahren zum Betreiben desselben**

(71) Anmelder: SIEMENS AKTIENGESELLSCHAFT, 80333 München (DE)
(72) Erfinder: Dillig, Reinhold, 96117, Memmelsdorf (DE); Herrmann, Bernd, 91074, Herzogenaurach (DE); Schwinn, Thomas, 91074, Herzogenaurach (DE)

(57) **Zusammenfassung**

Die Erfindung betrifft einen Frequenzumrichter (26) zum Betreiben einer elektrischen Maschine (14) an einem elektrischen Netz (12). Bei dem Frequenzumrichter (26) sind eine Einspeiseeinheit (28) und ein Umrichter (32) über einen ersten und einen zweiten Leitungszweig (Z₁, Z₂) eines Gleichspannungs-Zwischenkreises (30) miteinander verschaltet. Die beiden Leitungszweige (Z₁, Z₂) sind über zumindest einen Zwischenkreiskondensator (46) miteinander gekoppelt, durch den eine Zwischenkreiskapazität bereitgestellt ist. Es ist Aufgabe der vorliegenden Erfindung, für den Frequenzumrichter (26) einen ausreichenden Schutz bei einem Erdschluss der elektrischen Maschine (14) bereitzustellen. Bei dem erfindungsgemä-βen Frequenzumrichter (26) weisen hierzu sowohl der erste Leitungszweig (Z₁) als auch der zweite Leitungszweig (Z₂) einen Halbleiterschalter (S₁, S₂) auf.

## Beschreibung

Die Erfindung betrifft einen Frequenzumrichter zum Betreiben einer elektrischen Maschine an einem elektrischen Netz. Bei dem Frequenzumrichter sind eine Einspeiseeinheit und zumindest ein Umrichter über einen ersten und einen zweiten Leitungszweig miteinander verschaltet. Einer der Leitungszweige stellt dabei ein Hin- und der andere ein Rückleitelement für einen Stromkreis eines Gleichspannungs-Zwischenkreises dar. Die beiden Leitungszweige sind über zumindest einen Zwischenkreiskondensator miteinander gekoppelt, durch den eine Zwischenkreiskapazität in dem Gleichspannungs-Zwischenkreis, oder kurz Zwischenkreis, bereitgestellt ist. Die Erfindung betrifft auch ein Verfahren zum Betreiben des Frequenzumrichters. Ein Frequenzumrichter der genannten Art ist aus der DE 197 39 553 A1 bekannt.

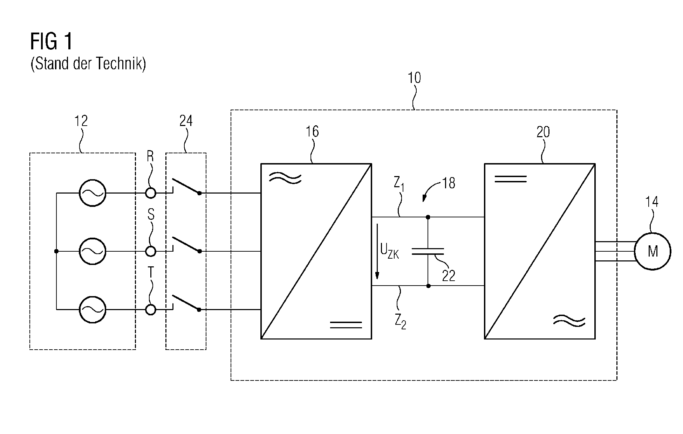

Die prinzipielle Funktionsweise eines Frequenzumrichters der genannten Art ist anhand der schematischen Darstellung in FIG 1 im Folgenden näher erläutert. Mittels eines Frequenzumrichters 10 kann elektrische Energie zwischen einem Wechselspannungs-Versorgungsnetz, im Folgenden kurz als Netz 12 bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie entweder vom Netz 12 zur Maschine 14 oder umgekehrt.

Mittels des Frequenzumrichters 10 ist es möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Eine netzseitige Einspeiseeinheit 16 des Frequenzumrichters 10 wandelt dazu zwischen der Netz-Wechselspannung und einer Gleichspannung U_{ZK} um, die zwischen zwei Leitungszweigen Z₁ und Z₂ eines Zwischenkreises 18 anliegt. Die Leitungszweige Z₁ und Z₂ verbinden die Einspeiseeinheit 16 mit einem Umrichter 20. Sie umfassen in der Regel Stromschienen. Der Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine 14 zu ermöglichen.

Um die elektrische Maschine 14 als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin, beispielsweise durch eine Vollweg-Gleichrichtung, die Gleichspannung U_{ZK}, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Ein Problem ergibt sich, wenn während der Betriebsphase beispielsweise in der elektrischen Maschine 14 ein defektes Bauteil einen Erdschluss verursacht, so dass ein Erdschlussstrom aus dem Netz 12 über den Frequenzumrichter 10, durch die Maschine 14 und über elektrisch leitende Teile in der Umgebung der Maschine 14 zurück ins Netz 12 fließt. Dieser Erdschlussstrom kann in der Regel nicht schnell genug durch das Hauptschütz 24 unterbrochen werden, um eine Beschädigung von Komponenten des Frequenzumrichters 10 zu verhindern.

Es ist Aufgabe der vorliegenden Erfindung, für einen Frequenzumrichter der beschriebenen Art einen ausreichenden Schutz bei einem Erdschluss bereitzustellen.

Die Aufgabe wird durch einen Frequenzumrichter gemäß Patentanspruch 1 und ein Verfahren gemäß Patentanspruch 8 gelöst. Vorteilhafte Weiterbildungen des erfindungsgemäßen Frequenzumrichters und des erfindungsgemäßen Verfahrens sind durch die Unteransprüche gegeben.

Der erfindungsgemäße Frequenzumrichter ist eine Weiterbildung des gattungsgemäßen Frequenzumrichters. Bei dem erfindungsgemäßen Frequenzumrichter weisen sowohl der erste Leitungszweig als auch der zweite Leitungszweig jeweils einen Halbleiterschalter auf. Gemäß dem erfindungsgemäßen Verfahren wird bei dem erfindungsgemäßen Frequenzumrichter zumindest während der Betriebsphase eine Stromstärke eines durch den Frequenzumrichter geführten Stromes überwacht. Bevorzugt wird ein Strom im Zwischenkreis selbst überwacht. Falls ein Betrag der überwachten Stromstärke einen vorbestimmten Schwellwert überschreitet, werden die beiden Halbleiterschalter geöffnet.

Hierdurch ergibt sich der Vorteil, dass eine sichere Unterbrechung eines Erdschlussstromes ermöglicht ist, ganz gleich über welchen der Leitungszweige der Strom dabei fließt. Die zweipolige Abschaltung, d.h. das Öffnen beider Halbleiterschalter, stellt sicher, dass bei jeder möglichen Form eines Erdschlusses in der elektrischen Maschine der Fehlerstrom unterbrochen werden kann, falls der Strom vom Netz her gespeist wird. Die Verwendung von Halbleiterschaltern macht es dabei möglich, den Erdschlussstrom schnell genug abzuschalten, bevor Komponenten des Frequenzumrichters beschädigt werden. Diese Möglichkeit wäre bei elektromechanischen Schaltern nicht gegeben. Zudem verschleißen Halbleiterschalter nicht mechanisch.

Als Halbleiterschalter kann ein einzelnes Bauteil oder eine Schaltung aus Halbleiterbauelementen verwendet werden. So kann zumindest einer der Halbleiterschalter etwa einen Transistor, insbesondere einen SiC-MOSFET (SiC - Siliziumcarbid, MOS - Metall-Oxid-Halbleiter, FET - Feldeffekttransistor), einen SiC-JFET (JFET - Sperrschicht-FET, Junction-FET), einen IGBT (Insulated Gate Bipolar Transistor) oder einen Si-Transistor (Si - Silizium), oder aber auch eine Kaskodenschaltung aus einem MOSFET und einem JFET umfassen. SiCbasierte Transistoren sind sehr Hitzebeständig, so dass bei deren Verwendung mittels des Frequenzumrichters auch elektrische Maschinen mit einer großen elektrischen Leistung, beispielsweise über 10 kW, betrieben werden können.

Bevorzugt ist der Halbleiterschalter selbstsperrend, d.h. bei einer Steuerspannung in einem Bereich um 0V befindet er sich in einem sperrenden Zustand. Dadurch ist in vorteilhafter Weise verhindert, dass bei einem Ausfall einer Steuereinrichtung für den Halbleiterschalter ein unkontrollierter Strom in dem Zwischenkreis fließt.

Vor dem Schließen des Hauptschützes ist der Zwischenkreiskondensator in der Regel ungeladen. In der Vorladephase ergibt sich hierdurch das Problem, dass nach dem Schließen des Hauptschützes die Stromstärke des vom Netz in den ungeladenen Zwischenkreiskondensator fließenden Ladestromes aufgrund der großen Kapazität des Zwischenkreiskondensators so groß werden kann, dass Komponenten der Einspeiseeinheit beschädigt werden.

In diesem Zusammenhang ergibt sich eine vorteilhafte Weiterbildung des erfindungsgemäßen Frequenzumrichters, wenn zumindest in einem der beiden Leitungszweige der entsprechende Halbleiterschalter zwischen der Einspeiseeinheit und einem Anschluss des zumindest einen Zwischenkreiskondensators angeordnet ist. Somit kann mittels dieses Halbleiterschalters auch ein Ladestrom des Zwischenkreiskondensators gesteuert werden. Entsprechend wird das erfindungsgemäße Verfahren vorteilhaft weitergebildet, indem zum Aufladen des Zwischenkreiskondensators in einer Vorladephase zunächst nur die Einspeiseeinheit mit dem Netz gekoppelt wird. Der zwischen die Einspeiseeinheit und den Zwischenkreiskondensator geschaltete Halbleiterschalter bleibt zunächst in einen sperrenden Zustand geschaltet. Anschließend kann der Zwischenkreiskondensator mittels des Halbleiterschalters kontrolliert mit elektrischer Energie aus dem Netz aufgeladen werden. Hierzu wird eine mittlere Stromstärke des Ladestromes des Zwischenkreiskondensators mittels des Halbleiterschalters gesteuert.

Zum Steuern der mittleren Stromstärke wird in einer ersten Ausführungsform des erfindungsgemäßen Verfahrens der Halbleiterschalter mit einem getakteten (insbesondere einem pulsweitenmodulierten) Steuersignal angesteuert, was im Weiteren als getakteter Betrieb bezeichnet wird. Durch getaktete Steuersignale wird die in einem Halbleiterschalter umgesetzte Verlustleistung und somit eine thermische Belastung des Halbleiterschalters gering gehalten.

Alternativ zum getakteten Betrieb kann der Halbleiterschalter durch ein entsprechendes Steuersignal auch als steuerbare Stromquelle betrieben werden. Hierbei wird eine (momentane) Stromstärke eines durch den Halbleiterschalter fließenden Laststroms durch Einstellen des Steuersignals gesteuert. Unter einem Laststrom ist bei einem Bipolartransistor der Kollektor-Emitter-Strom zu verstehen, bei einem FET der Drain-Source-Strom. Im Betrieb als steuerbare Stromquelle ist die Stromstärke des Laststromes nahezu unabhängig von der Spannung, die über dem Halbleiterschalter in Flussrichtung des Laststromes abfällt. Die Stromstärke ist stattdessen über das Steuersignal, d.h. eine eingestellte Steuerspannung oder den eingestellten Steuerstrom, am Steuereingang (Basis bzw. Gate) des Halbleiterschalters einstellbar. Bei einem Bipolartransistor entspricht diese Betriebsweise dem Betrieb im aktiven oder Verstärkungsbereich, bei einem FET dem Betrieb im Sättigungsbereich.

Gemäß einer anderen vorteilhaften Weiterbildung sind der erste und der zweite Leitungszweig zusätzlich über einen Kommutierungskondensator elektrisch miteinander gekoppelt, durch welchen eine Kommutierungskapazität für die Einspeiseeinheit bereitgestellt ist. Die Anschlüsse des Kommutierungskondensators sind dabei in den jeweiligen Leitungszweigen zwischen der Einspeiseeinheit und den jeweiligen Halbleiterschaltern angeordnet. Die Einspeiseeinheit und der Kommutierungskondensator sind also auch dann elektrisch miteinander verbunden, wenn sich beide Halbleiterschalter in einem sperrenden Zustand befinden.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einer Induktivität des Netzes, an das der Frequenzumrichter angeschlossen ist, oder von einer Kommutierungsinduktivität von Drosseln, die der Einspeiseeinheit vorgeschaltet sein können, gewählt sein.

Mittels der Kommutierungskapazität kann erreicht werden, dass eine beim Schalten von Komponenten des Einspeisewandlers entstehende Induktionsspannung stets unterhalb eines für die Funktionstüchtigkeit des Frequenzumrichters kritischen Spannungswertes bleibt. Indem die Kommutierungskapazität sehr viel kleiner als die Zwischenkreiskondensator-Kapazität gewählt ist, ist sichergestellt, dass durch einen Ladestrom des Kommutierungskondensators der Einspeisewandler beim Schließen des Hauptschützes nicht beschädigt wird.

Bei einer weiteren vorteilhaften Ausführungsform des erfindungsgemäßen Frequenzumrichters ist der Zwischenkreiskondensator mit der Einspeiseeinheit über eine stromkompensierte Gleichtaktdrossel (Englisch: Common Mode Choke), kurz Gleichtaktdrossel, gekoppelt. So ist es möglich, auch bei eine sehr geringen parasitären Induktivität des Zwischenkreiskondensators und gegebenenfalls des Kommutierungskondensators sowie bei einem geringen ESR (ESR - equivalent series resistance, äquivalenter Reihenwiderstand) dieser beiden Kondensatoren die Halbleiterschalter der Leitungszweige zumindest für eine kurze Zeitdauer (beispielsweise in dem bereits beschriebenen getakteten Betrieb) vollständig leitend zu schalten. Die dann in den Halbleiterschaltern umgesetzte Verlustleistung bleibt aufgrund des durch die Gleichtaktdrossel gedämpften Stroms begrenzt, so dass die Halbleiterschalter nicht beschädigt werden. Ein weiterer vorteilhafter Effekt ist eine Verbesserung der EMV (Elektromagnetische Verträglichkeit).

Bevorzugt weist die Gleichtaktdrossel Freilaufdioden auf. Diese sind dann parallel zu Spulen der Gleichtaktdrossel geschaltet und dienen dem Freilauf derselben nach jedem Abschalten der Halbleiterschalter.

Bei einer anderen vorteilhaften Ausführungsform des erfindungsgemäßen Frequenzumrichters ist in zumindest einem der beiden Leitungszweige eine Diode zu dem jeweiligen Halbleiterschalter parallel geschaltet. Die Diode ist dabei jeweils derart ausgerichtet, dass ein Stromfluss von dem Umrichter zur Einspeiseeinheit ermöglicht ist. Dies erlaubt einen Generatorbetrieb der elektrischen Maschine, bei dem unabhängig vom Typ der Halbleiterschalter eine nur sehr geringe Verlustleistung im Zwischenkreis umgesetzt wird.

Der erfindungsgemäße Frequenzumrichter bietet einen besonderen Vorteil im Zusammenhang mit einem so genannten Voltage-Protection-Module (VPM). Ein solches Modul ist eine Überwachungseinrichtung, mit der die Zwischenkreisspannung des Frequenzumrichters überwacht wird und, falls ein Betrag der überwachten Spannung einen vorbestimmten Schwellenwert überschreitet, ein Stromfluss vom Umrichter in den Zwischenkreis unterbrochen wird. Dazu werden Wechselspannungs-Phasenleiter im Umrichter oder ebensolche an einer elektrischen Maschine (hier z.B. über Thyristoren) kurzgeschlossen. Dann wird der Zwischenkreiskondensator nicht weiter über den Umrichter aufgeladen, wodurch ein weiterer Spannungsanstieg verhindert ist.

Mittels eines VPM, das in den Frequenzumrichter integriert ist, ließ sich bisher ein Stromfluss bei einem Erdschluss nicht zuverlässig unterbrechen. Dazu war ein externes VPM nötig, das als separate Schaltung außerhalb des Frequenzumrichters bereitgestellt sein musste. Durch die bei dem erfindungsgemäßen Frequenzumrichter ermöglichte zweipolige Stromunterbrechung kann nun durch Erzeugen eines entsprechenden Steuersignals zusätzlich das Öffnen der beiden Halbleiterschalter ausgelöst werden. Hierdurch ist es nun auch möglich, ein internes VPM im Umrichter zu betreiben, mit dem sich auch bei einem Erdschluss in einer elektrischen Maschine ein Spannungsanstieg im Zwischenkreis begrenzen lässt.

Ein Halbleiterschalter, der in einem der Leitungszweige zwischen die Einspeiseeinheit und den Zwischenkreiskondensator geschaltet ist, kann in vorteilhafter Weise auch dazu genutzt werden, die Einspeiseeinheit während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von der Einspeiseeinheit aus dem Netz empfangenen elektrischen Leistungsflusses, so dass der Zwischenkreiskondensator nahezu vollständig entladen sein kann, wenn der Leistungsfluss wieder einsetzt. Gemäß einer Weiterbildung des erfindungsgemäßen Verfahrens wird hier der Zwischenkreiskondensator in einer Nachladephase ähnlich wie auch in der Vorladephase aufgeladen. So kann ein kritischer Stromstärkewert des Nachladestromes vermieden werden.

Gemäß einer anderen Weiterbildung des erfindungsgemäßen Verfahrens wird ein Ladezustand des Zwischenkreiskondensators beobachtet. Falls nach einer vorbestimmten Zeitdauer seit Beginn der Vorladephase der Ladezustand ein vorbestimmtes Kriterium erfüllt, wenn also beispielsweise der Zwischenkreiskondensator noch nicht zumindest zur Hälfte aufgeladen ist, wird die Vorladephase abgebrochen und der Halbleiterschalter in einen sperrenden Zustand geschaltet. So ist vorteilhaft vermieden, dass der Halbleiterschalter oder die Einspeiseeinheit beschädigt wird, wenn (umrichterseitig) im Zwischenkreis, im Umrichter selbst oder in der elektrischen Maschine bereits während der Vorladephase ein Kurzschluss vorhanden ist.

Im Folgenden wird die Erfindung anhand eines bevorzugten Ausführungsbeispiels näher erläutert. Dazu zeigt:
- FIG 1: ein Blockschaltbild eines Frequenzumrichters gemäß dem Stand der Technik, mit dem eine elektrische Ma-schine an einem Netz betrieben wird, und
- FIG 2: ein Blockschaltbild eines Frequenzumrichters gemäß einer Ausführungsform des erfindungsgemäßen Frequen-zumrichters.

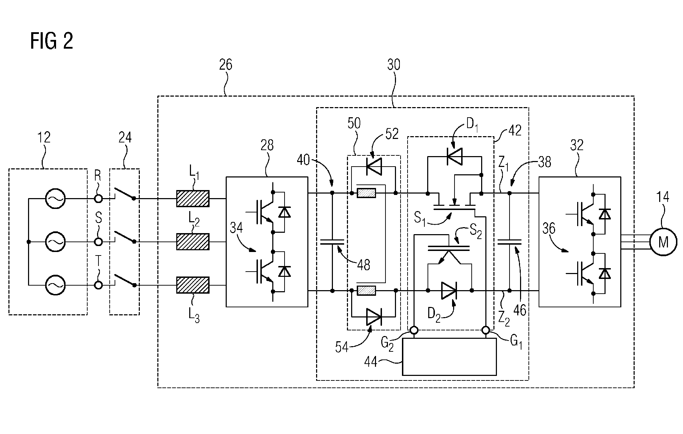

In FIG 2 ist ein Frequenzumrichter 26 gezeigt, der über ein Hauptschütz 24 an den Netzphasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier deshalb nicht noch einmal erläutert.

Bei dem Frequenzumrichter 26 ist eine Einspeiseeinheit 28 über einen Zwischenkreis 30 mit einem Umrichter 32 verschaltet.

Die Einspeiseeinheit 28 kann in bekannter Weise ausgestaltet sein. Sie weist in dem gezeigten Beispiel zum Gleichrichten der zwischen den Netzphasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind netzseitig Drosseln L_{1,} L₂, L₃ vorgeschaltet, die als Kommutierungsinduktivitäten ausgebildet sind.

Ein umrichterseitiger Teil 38 des Zwischenkreises 30 und ein einspeiseseitiger Teil 40 sind über eine Schalteinrichtung 42 miteinander verschaltet.

Ein Steuereingang G₁ eines Halbleiterschalters S₁ und ein Steuereingang G₂ eines Halbleiterschalters S₂ der Schalteinrichtung 42 sind mit einer Steuereinrichtung 44 gekoppelt. Bei dem gezeigten Beispiel handelt es sich bei dem Schalter S₁ um einen SiC-MOSFET und bei dem Schalter S₂ um einen IGBT in Si-Technologie. Der Schalter S₁ kann auch als eine Kaskodenschaltung aus einem SiC-JFET und einem MOSFET bereitgestellt sein. Die beiden Schalter S₁ und S₂ können bei der Schalteinrichtung 42 auch in dem jeweils anderen Leitungszweig Z₁ bzw. Z₂ angeordnet sein. Die Schalteinrichtung 42 ist bei einer verketteten Netzspannung bis über 1200 V sperrspannungsfähig und auch unter Stromfluss schaltbar.

Dioden D₁ und D₂ der Schalteinrichtung 42 ermöglichen in einem Generatorbetrieb der elektrischen Maschine 14 einen Stromfluss vom Umrichter 32 zur Einspeiseeinheit 28. Falls eine parasitäre Diode des Schalters S₁ bzw. S₂ eine ausreichend große Stromtragfähigkeit aufweist, kann auf die entsprechende Diode D₁ bzw. D₂ auch verzichtet werden.

Im umrichterseitigen Teil 38 des Zwischenkreises 30 befindet sich ein Zwischenkreiskondensator 46. Eine Kapazität des Zwischenkreiskondensators 46 kann in dem gezeigten Beispiel grö-βer als 1 mF sein.

In dem einspeiseseitigen Teil 40 sind Leitungszweige Z₁ und Z₂ des Zwischenkreises über einen Kommutierungskondensator 48 kapazitiv miteinander gekoppelt. Der Kommutierungskondensator 48 kann ein Keramik- oder Folienkondensator sein. Die Kapazität des Kommutierungskondensators 48 ist in diesem Beispiel kleiner als 5 µF. Sie ist aber im Allgemeinen in Abhängigkeit von einer über den Frequenzumrichter 26 leitbaren Gesamtleistung gewählt, wobei sie zudem bevorzugt weniger als zehn Prozent der Kapazität des Zwischenkreiskondensators 46 beträgt.

In dem umrichterseitigen Teil 38 ist des Weiteren eine Gleichtaktdrossel 50 mit Freilaufdioden 52, 54 eingebaut. Die Gleichtaktdrossel 50 ist zwischen den Kommutierungskondensator 48 und den Zwischenkreiskondensator 46 geschaltet.

Mittels des in FIG 2 gezeigten Frequenzumrichters 26 ist sowohl eine gesteuerte Vorladung des Zwischenkreiskondensators 46 in der Vorladephase als auch eine schnelle Trennung des umrichterseitigen Teils 38 des Zwischenkreises 30 vom Netz 12 zum Abbrechen einer Betriebsphase möglich.

Der Schalter S₂ ermöglicht es zusammen mit dem Schalter S₁, den Zwischenkreis 30 auch bei einem Erdschluss zuverlässig abzuschalten.

Der Schalter S₁ (SiC-MOSFET) muss beim Vorladen des Zwischenkreiskondensators 46 nicht gleichzeitig mit dem Schalter S₂ geschaltet werden. Dies eröffnet die Möglichkeit, beide Schalter nach unterschiedlichen Kriterien auszulegen. So kann als Schalter S₂ ein Halbleiterschalter gewählt sein, der im leitfähigen Zustand einen möglichst geringen Durchgangswiderstand aufweist, wie z.B. der in FIG 2 gezeigte Si-Transistor. Der Schalter S₂ kann dann während der Vorladephase durchgehend in einen leitenden Zustand geschaltet sein.

Die Vorladung des Zwischenkreises 30 kann getaktet durchgeführt werden. Dazu werden zunächst die beiden Schalter S₁ und S₂ in einen sperrenden Zustand geschaltet, so dass der umrichterseitige Teil 38 des Zwischenkreises 30 von der Einspeiseeinheit 28 elektrisch getrennt ist. Anschließend wird das Hauptschütz 24 geschlossen, so dass die Einspeiseeinheit 28 an ihrem zwischenkreisseitigen Anschluss eine gleichgerichtete Spannung erzeugt. Die Stromaufnahme des Kommutierungskondensators 48 ist hierbei nur durch die Induktivität der Drosseln L₁, L₂, L₃ und die Netzinduktivität begrenzt. Da die Kommutierungskapazität des Kommutierungskondensators 48 verhältnismäßig klein ist, ist dieser schnell auf den Gleichrichtwert der Netzspannung geladen. Somit steigt trotz der harten, d.h. abrupten, Anschaltung des Kommutierungskondensators 48 an das Netz 12 die mittlere Stromstärke nicht über einen für die Einspeiseeinheit 28 kritischen Wert.

Für die getaktete Vorladung des Zwischenkreiskondensators 46 wird von der Steuereinheit 44 an dem Steueranschluss G₁ ein getaktetes Steuersignal erzeugt, dessen Puls-Pause-Zeiten nach Bedarf und nach Größe der Zwischenkreiskapazität gewählt werden können. Durch Erzeugen eines zweiten Steuersignals am Steueranschluss G₂ wird der Schalter S₂ in einen dauerhaft leitenden Zustand geschaltet. Durch das Steuersignal am Steueranschluss G₁ wird der Schalter S₁ puls- oder stoßweise in einen leitenden Zustand geschaltet, so dass elektrische Ladung von dem Kommutierungskondensator 48 über die Schalteinrichtung 42 in den Zwischenkreiskondensator 46 transferiert wird. Es kann so lange Ladung transferiert werden, bis die beiden Kondensatoren 46, 48 gleiche Spannungen aufweisen. Dieser Transfer wird im Folgenden als Umladezyklus bezeichnet.

Der hierbei fließende Umladestrom wird durch die Gleichtaktdrossel 50 begrenzt. So ist es möglich den Schalter S₁ vollständig leitend zu schalten. Die in Schalteinrichtung 42 dabei umgesetzte Verlustleistung bleibt aufgrund des begrenzten Umladestromes so gering, dass die Schalter S₁ und S₂ nicht beschädigt werden. Falls in dem Frequenzumrichter 26 ausreichend große (parasitäre) Induktivitäten und Widerstände vorhanden sind, kann auch auf eine Gleichtaktdrossel verzichtet werden.

Nach einer bestimmten Einschaltzeit wird der erste Umladezyklus beendet, indem der Schalter S₁ wieder in den sperrenden Zustand geschaltet wird. Der Kommutierungskondensator 48 wird hierdurch erneut mit elektrischer Energie aus dem Netz 12 über Dioden der Halbbrücken der Einspeiseeinheit 28 (also auch der Halbbrücke 34) aufgeladen, d.h. ein zweiter Umladezyklus wird begonnen.

Es werden so viele Umladezyklen durchlaufen, bis eine gewünschte Vorladespannung am Zwischenkreiskondensator 46 erreicht ist. Dies kann beispielsweise der Gleichrichtwert der Netzspannung sein. Nach Erreichen dieser Vorladeschwellwertspannung wird auch der Schalter S₁ dauerhaft in einen leitenden Zustand geschaltet, so dass eine möglichst geringe Spannung über ihm abfällt. Die in der daraufhin folgenden Betriebsphase auftretenden Verluste in der Schalteinrichtung 42 sind somit verhältnismäßig gering.

Anstelle der getakteten Vorladung kann der Schalter S₁ für das Umladen der elektrischen Energie auch als gesteuerte Stromquelle betrieben werden. Hierzu wird er nur zu einem Teil aufgesteuert, so dass er sich zwar in einem leitenden Zustand befindet, aber die über ihm abfallende Spannung so groß ist, dass der Laststrom begrenzt ist. Um die Durchlassverluste auf die Schalter S₁ und S₂ zu verteilen, kann auch vorgesehen sein, beide Schalter S₁ und S₂ als gesteuerte Stromquellen zu betreiben.

Durch Betreiben zumindest eines der Schalter S₁ und S₂ als gesteuerte Stromquellen ist es auch möglich, den Frequenzumrichter 26 ohne die Gleichtaktdrossel 50 einzusetzen. Es kann auch vorgesehen sein, hierzu einen der Schalter getaktet und den anderen als gesteuerte Stromquelle zu betreiben.

Bei der Vorladung können die Steuersignale für die Steueranschlüsse G₁ und G₂ einen fest vorgegebenen Verlauf aufweisen. Es ist aber auch ein geregelter Betrieb möglich, in dem die Steuersignale, z. B. die Puls-Pause-Zeiten im getakteten Betrieb, in Abhängigkeit von einer Messgröße erzeugt werden. Beispielsweise kann dazu ein Ladezustand des Zwischenkreiskondensators 46 mittels eines Spannungssensors überwacht werden.

Die Steuereinrichtung 44 empfängt Messsignale von (nicht dargestellten) Stromwandlern, durch die eine Stromstärke eines zur elektrischen Maschine 14 fließenden Stromes erfasst wird. Die Steuereinrichtung 44 überwacht diese Stromstärke. Bei Erkennen eines Erdfehlerstromes in der elektrischen Maschine 14 werden beide Schalter S₁ und S₂ in einen sperrenden Zustand geschaltet, wodurch der Fehlerstrom unterbrochen wird.

Bei dem Frequenzumrichter 26 ist in dem Umrichter 32 ein (nicht näher dargestelltes) VPM integriert. Bei einer Überspannung im Zwischenkreis 30 werden IGBT der Halbbrücken, d.h. auch der Halbbrücke 36, in einen leitenden Zustand geschaltet. Bei einem Ausfall der Rückspeisefähigkeit der Einspeiseeinheit 28 ins Netz 12 und bei gleichzeitigem generatorischen Betrieb der elektrischen Maschine 14, also z.B. einer Synchronmaschine, verhindern die leitend geschalteten IGBT im Umrichter 32, dass die von der elektrischen Maschine 14 in den Umrichter 32 eingespeiste Energie den Zwischenkreiskondensator 46 unkontrolliert auflädt, so dass eine über dem Zwischenkreiskondensator 46 abfallende Spannung über dessen Maximalspannung steigt und er hierdurch zerstört wird.

Das VPM überwacht über einen (nicht dargestellten) Spannungssensor eine Spannung im Zwischenkreis 30 (oder in der elektrischen Maschine 14 selbst). Falls der Betrag der überwachten Spannung einen Schwellenwert überschreitet, werden die drei Phasen des Umrichters 32 durch Schließen der IGBT kurzgeschlossen. Der Umrichter 32 gibt dann keine elektrische Energie mehr in den Zwischenkreis 30 ab. Dies funktioniert auch bei einem Erdschluss, bei dem ein Strom von der elektrischen Maschine 14 über den Erdschluss und die Einspeiseeinheit 28 in den Zwischenkreiskondensator 46 fließen könnte. Bei dem Zwischenkreis 26 ist dies dadurch verhindert, dass die Steuereinrichtung 44 auf ein Signal des VPM hin die beiden Schalter S₁ und S₂ öffnet. Mit Hilfe der beiden Schalter S₁, S₂ lässt sich so das VPM in jedem fehlerhaften Betriebszustand, insbesondere auch bei einem Erdschluss, betreiben. Das in den Umrichter 32 integrierte VPM benötigt keinen zusätzlichen Platz außerhalb des Frequenzumrichters 26, wie es bei einem externen VPM der Fall wäre. Zudem kann ein internes VPM kostengünstiger bereitgestellt werden, denn es sind kein gesondertes Gehäuse und auch keine gesonderten Thyristoren zum Kurzschließen der Phasen nötig.

Bei dem Frequenzumrichter 26 ist auch vorgesehen, durch die Steuereinrichtung 44 und die Schalteinrichtung 42 in anderen Fehlerfällen, z.B. bei einem Kurzschluss, einen Stromfluss im Zwischenkreis zu unterbrechen.

Durch das Beispiel ist gezeigt, wie mittels zweier Halbleiterschalter (Schalter S₁ und S₂) ein dreifacher Schutz für den Frequenzumrichter 26 bereitgestellt werden kann. Bei einem Erdschluss ist eine sichere Abschaltung des Zwischenkreises 30 gewährleistet. Bei einem Kurzschluss ist ebenfalls eine Trennung vom Netz 12 möglich. In der Vorladephase (oder in einer Nachladephase) kann die mittlere Stromstärke des Ladestroms in den Zwischenkreiskondensator 46 begrenzt werden.

## Patentansprüche

1. Frequenzumrichter (26) zum Betreiben einer elektrischen Maschine (14) an einem elektrischen Netz (12), wobei der Frequenzumrichter (26) eine Einspeiseeinheit (28) und einen Umrichter (32) aufweist, die über einen ersten und einen zweiten Leitungszweig (Z₁, Z₂) miteinander verschaltet sind, wobei einer der Leitungszweige (Z₁, Z₂) ein Hin- und der andere ein Rückleitelement eines Gleichspannungs-Zwischenkreises (30) bildet und die beiden Leitungszweige (Z₁, Z₂) über zumindest einen Zwischenkreiskondensator (46) miteinander gekoppelt sind, so dass in dem Zwischenkreis (30) eine Zwischenkreiskapazität bereitgestellt ist, **dadurch gekennzeichnet, dass** sowohl in dem ersten Leitungszweig (Z₁) als auch in dem zweiten Leitungszweig (Z₂) jeweils ein Halbleiterschalter (S₁, S₂) bereitgestellt ist.

2. Frequenzumrichter (26) nach Anspruch 1, bei dem zumindest in einem der beiden Leitungszweige (Z₁, Z₂) der Halbleiterschalter (S₁, S₂) zwischen der Einspeiseeinheit (28) und einem Anschluss des zumindest einen Zwischenkreiskondensators (46) angeordnet ist.

3. Frequenzumrichter (26) nach Anspruch 1 oder 2, bei dem zumindest einer der beiden Halbleiterschalter (S₁, S₂) einen Transistor, insbesondere einen SiC-MOSFET, einen SiC-JFET, einen IGBT oder einen Si-Transistor, oder eine Kaskodenschaltung aus einem MOSFET und einem JFET umfasst, wobei bevorzugt zumindest einer der Halbleiterschalter (S₁, S₂) selbstsperrend ist.

4. Frequenzumrichter (26) nach einem der vorhergehenden Ansprüche, bei dem der erste und der zweite Leitungszweig (Z₁, Z₂) zusätzlich über einen Kommutierungskondensator (48) miteinander gekoppelt sind, durch welchen eine Kommutierungskapazität für die Einspeiseeinheit (28) bereitgestellt ist, wobei Anschlüsse des Kommutierungskondensators (48) an den jeweiligen Leitungszweigen (Z₁, Z₂) zwischen der Einspeiseeinheit (28) und den jeweiligen Halbleiterschaltern (S₁, S₂) angeordnet sind.

5. Frequenzumrichter (26) nach einem der vorhergehenden Ansprüche, bei dem der Zwischenkreiskondensator (46) mit der Einspeiseeinheit (28) über eine Gleichtaktdrossel (50) gekoppelt ist, die bevorzugt Freilaufdioden (52,54) aufweist.

6. Frequenzumrichter (26) nach einem der vorhergehenden Ansprüche, bei dem in zumindest einem der beiden Leitungszweige (Z₁, Z₂) zu dem jeweiligen Halbleiterschalter (S₁, S₂) eine Diode (D₁, D₂) parallel geschaltet ist, durch welche ein Stromfluss von dem Umrichter (32) zur Einspeiseeinheit (28) ermöglicht ist.

7. Frequenzumrichter (26) nach einem der vorhergehenden Ansprüche, bei dem eine Überwachungseinrichtung (44) bereitgestellt ist, die dazu ausgelegt ist, eine elektrische Spannung, insbesondere im Zwischenkreis, zu überwachen und, falls ein Betrag der überwachten Spannung einen vorbestimmten Schwellwert überschreitet, durch Erzeugen eines Steuersignals das Öffnen der beiden Halbleiterschalter (S₁, S₂) auszulösen.

8. Verfahren zum Betreiben eines Frequenzumrichters (26) gemäß einem der vorhergehenden Ansprüche, umfassend die Schritte:
- Überwachen einer Stromstärke eines durch den Frequenzumrichter (26) fließenden Stromes, bevorzugt im Zwischenkreis (30), und
- Öffnen der beiden Halbleiterschalter (S₁, S₂), falls ein Betrag der überwachten Stromstärke einen vorbestimmten Schwellwert überschreitet.

9. Verfahren nach Anspruch 8 zum Betreiben eines Frequenzumrichters (26) gemäß einem der Ansprüche 2 bis 7, bei dem zum Aufladen des Zwischenkreiskondensators (46) in einer Vorladephase zunächst die Einspeiseeinheit (28) mit dem Netz (12) gekoppelt wird und anschließend der Zwischenkreiskondensator (46) mit elektrischer Energie aus dem Netz (12) aufgeladen wird und hierbei eine mittlere Stromstärke eines Ladestromes des Zwischenkreiskondensators (46) mittels zumindest eines der beiden Halbleiterschalter (S₁, S₂) gesteuert wird.

10. Verfahren nach Anspruch 9, bei dem zumindest einer der beiden Halbleiterschalter (S₁, S₂) zum Steuern der mittleren Stromstärke mit einem getakteten, insbesondere einem pulsweitenmodulierten, Steuersignal angesteuert wird.

11. Verfahren nach einem der Ansprüche 9 oder 10, wobei zumindest einer der beiden Halbleiterschalter (S₁, S₂) in der Vorladephase zum Steuern der mittleren Stromstärke als steuerbare Stromquelle betrieben wird und hierbei eine Stromstärke eines durch diesen Halbleiterschalter (S₁, S₂) fließenden Laststroms durch Einstellen des Steuersignals gesteuert wird.

12. Verfahren nach einem der Ansprüche 9 bis 11, wobei in einer Betriebsphase nach einer Unterbrechung eines von der Einspeiseeinheit (28) aus dem Netz (12) empfangenen elektrischen Leistungsflusses der Zwischenkreiskondensator (46) in einer Nachladephase durch Steuern einer mittleren Stromstärke eines Nachladestromes des Zwischenkreiskondensators (46) mittels zumindest eines der beiden Halbleiterschalter (S₁, S₂) wieder aufgeladen wird.

13. Verfahren nach einem der Ansprüche 9 bis 12, wobei ein Ladezustand des zumindest einen Zwischenkreiskondensators (46) beobachtet wird und die Vorladephase abgebrochen und zumindest einer der beiden Halbleiterschalter (S₁, S₂) in einen sperrenden Zustand geschaltet wird, falls nach einer vorbestimmten Zeitdauer seit Beginn der Vorladephase der Ladezustand ein vorbestimmtes Kriterium erfüllt.
